# EUROPÄISCHE PATENTSCHRIFT

(11) **EP 0 305 792 B1**
(45) Veröffentlichungstag und Bekanntmachung des Hinweises auf die Patenterteilung: **11.08.1993**
(21) Anmeldenummer: 88113195.7
(22) Anmeldetag: 13.08.1988
(51) Int. Cl.: C03B 11/08, C03B 40/02

(54) **Verfahren und Pressform zum Herstellen von gepressten Glasformkörpern für präzisionsoptische Zwecke**
Method and press mould for making pressed glass bodies for optical-precision purposes
Procédé et moule de pressage pour la fabrication de corps en verre pressés à des fins de précision optique

(30) Priorität: 02.09.1987 DE 3729281
(43) Veröffentlichungstag der Anmeldung: 08.03.1989
(73) Patentinhaber: Schott Glaswerke, 55122 Mainz (DE); Carl-Zeiss-Stiftung trading as SCHOTT GLASWERKE, 55122 Mainz (DE)
(72) Erfinder: Schinker, Martin, Dr., D-7802 Merzhausen (DE); Brormann, Johannes, D-7805 Bötzingen (DE); Stahn, Dieter, D-7801 Stegen (DE); Döll, Walter, Dr., D-7801 Reute (DE); Kleer, Günter, Dr., D-7801 Buchenbach (DE); Manns, Peter, Dr., D-7800 Freiburg (DE)
(74) Vertreter: Fuchs Mehler Weiss

(56) Entgegenhaltungen:
- EP-A- 0 146 315
- EP-A- 0 164 930
- EP-A- 0 191 618
- WO-A-85/00162
- WO-A-87/05594
- US-A- 3 833 347
- US-A- 4 168 961

## Beschreibung

Die Erfindung betrifft ein Verfarhren und eine Preßform zum Herstellen eines Glasformkörpers für präzisionsoptische, insbesondere abbildende Zwecke. Zum Verformen eines Glasrohlings wird dabei eine Preßform mit auf Tragschichten ausgebildeten Funktionsschichten verwendet, die aus einem verschleißarmen Material bestehen und deren dem Preßling ausgesetzte Funktionsflächen eine dem zu erzeugenden Glaskörper entsprechend hohe Oberflächengüte aufweisen. Die Oberfläche des Glasrohlings besitet in den optisch relevanten Bereichen eine hohe Oberflächenqualität. mindestens entsprechend einer Feuerpoliturqualität und das Verformen des Glasrohlings in der Preßform erfolgt bei erhöhter Temperatur unter einer im wesentlichen inerten Atmosphäre, Um den Preßling als fertigen Glasformkörper der Preßform entnehmen zu können, wird der Glasformling in der Preßform bis zum Erreichen einer ausreichenden Gestaltfestigkeit abgekühlt.

Bei einem bekannten Verfahren der angegebenen Art (DE-OS 26 39 259) werden Funktionsflächen der Preßform verwendet, die durch Schleifen und Polieren mechanisch auf eine gewünschte Oberflächenqualität gebracht worden sind; die Funktionsflächen sind deshalb an Funktionsschichten ausgebildet, die eine zum mechanischen Bearbeiten ausreichend große Dicke haben. Eine genügend große Dicke der Funktionsschichten ist auch deshalb vorgesehen, weil die Funktionsschichten so formsteif sein müssen, daß sie unter der Einwirkung der Preßkräfte nicht unzulässig stark verformt werden. Die Herstellung und die abtragende Bearbeitung derartiger verhältnismäßig harter Funktionsschichten sind sehr aufwendig; dennoch ist es schwierig, damit Glasformkörper hoher Oberflächenqualität reproduzierbar zu pressen.

Bei dem bekannten Verfahren wird isotherm gepreßt, d.h. vor Beginn des Pressens werden der Glasrohling und die auf ihn einwirkenden Teile der Presse auf im wesentlichen gleiche Temperaturen gebracht, und es wird in einem Endabschnitt des Pressens die Temperatur der Preßform und des darin weiter unter Druckbelastung gehaltenen Glaspreßlings so allmählich abgesenkt, daß die Temperaturen der Preßform und des Glaspreßlings auch beim Abkühlen im wesentlichen gleich bleiben.

Das isotherme Pressen wird als vorteilhaft angesehen, weil dadurch thermische Spannungen in den formnahen Bereichen des Glases und beim Abkühlen resultierende Mikroverschiebungen zwischen Glasoberfläche und Formoberfläche, durch die es zu Oberflächenfehlern des Glaspreßkörpers kommen könnte, vermieden werden.

Auch bei anderen bekannten Verfahren ähnlicher Art wird aus den dargelegten Gründen ein isothermes Pressen angewandt, so zum Beispiel nach EP 19 342 im Temperaturbereich des American softening point (10^{7,6} dPa.s), oder nach dem EP 786 58, nach welchem im übrigen bei verhältnismäßig hohen Glasviskositäten gepreßt wird.

In der EP-A 0 191 618 werden Funktionsschichten auf die mechanisch (spanabhebend bearbeiteten) bereits vorgeformten Flächen der Basisschicht der Preßform aufgetragen, wobei die Funktionsschichten dann so dünn sind, daß sie keiner Oberflächenbearbeitung mehr bedürfen. Die Basisschicht besteht dabei aus Hartmetalllegierungen wie z.B. WC, aus metallkeramischen Werkstoffen wie TiC, TiN, Cr₃C₂, Al₂O₃ oder aus Si, während die Funktionsschicht aus Iridium oder Ruthenium oder Ir- oder Ru-Legierungen mit einem Vertreter aus der Gruppe Pt, Re, Rh, Os besteht. Auch hier wird jedoch unter isothermen Bedindungen gepreßt, so daß sich bei solchen dünnen Funktionsschichten infolge geringfügiger Haftung des Glaspreßlings an dieser die Gefahr besteht, daß die Funktionsschicht beim Ablösen des Preßformlings beschädigt wird.

Es sind andererseits auch Verfahren zum Pressen von Glasformkörpern für optische Zwecke bekannt, bei denen in herkömmlicher Weise ein genügend erhitzter Glasrohling zwischen erheblich kühleren Preßform-Funktionsflächen gepreßt wird (DE-PS 397 427), ohne daß auf bestimmte Beziehungen zwischen den Temperaturen des Glasrohlings und der Preßform-Funktionsflächen geachtet worden wäre. Die auf diese Weise hergestellten gepreßten Glasformkörper, insbesondere Linsen, sind für Abbildungszwecke nicht geeignet und werden z.B. für Kondensoren verwendet.

Bei den neueren Verfahren wird aber gerade das Pressen von Glasformkörpern für abbildende Zwecke angestrebt, und die Entwicklung der Technik hat gezeigt, daß es dafür auch auf die Einhaltung bestimmter Temperaturen ankommen kann. So ist insbesondere in dem schon genannten EP 786 58 ein Verfahren beschrieben, bei dem das Pressen bei einer so hohen Viskosität des Glases, d.h. bei so niedrigen Temperaturen erfolgt, daß der Glasrohling in akzeptablen Preßzeiten nur minimal verformt werden kann und deshalb schon möglichst genau in der für den Preßformkörper gewünschten Gestalt vorliegen muß. Diese Notwendigkeit, genau vorgearbeitete Glasrohlinge zu verwenden, erhöht den erforderlichen Aufwand. Die niedrigen Preßtemperaturen erfordern lange Preßzeiten und hohe Preßdrücke, so daß das Verfahren leicht unwirtschaftlich wird und/oder zu fehlerhaften Produkten führen kann.

Die vorliegende Erfindung geht von der Aufgabe aus, ein Verfahren zum Herstellen von für Abbildungszwecke geeigneten preßgeformten Glasformkörpern zu schaffen, das mit hoher Produktionsgeschwindigkeit und Zuverlässigkeit zu Glasformkörpern höchster optischer Qualität führt.

Nach der Erfindung wird diese Aufgabe gelöst mit einem Verfahren und einer Preßform der eingangs angegebenen Art, wobei verfahrensgemäß eine Preßform verwendet wird, deren gestalt feste Tragschichten aus einem amorphen, monokristallinen oder polykristallinen Material mit einer Korngröße <0,5 µm ausgebildet wurden, das wenigstens eines der Elemente Ti, Zr, Hf, V, Nb, Ta, Cr, Mo, W, Al, Si, Ge und C enthält und diese Tragschichten an ihren die Funktionsschichten tragenden Flächen in einer Oberflächengüte bearbeitet wurden, die mindestens der Spezifikation 5/2 x 0,040 gemäß DIN 3140 entspricht, wobei die Funktionsschichten mindestens eines der in der Tragschicht vorliegenden Elemente und eine Verbindung aufweisen, die C und/oder N enthält und als unstrukturierte Schicht in einer Dicke bis maximal 5 µm auf die Tragschichten aufgetragen wurde, wobei die unbearbeitete Oberfläche der Funktionsschichten die Funktionsfläche bildet, die verwendete, im wesentliche inerte Atmosphäre nicht oxidierend ist und einen Sauerstoffpartialdruck von weniger als 10⁻³mbar aufweist, und
der Preßvorgang temperaturmäßig so geführt wird, daß zu Beginn des Pressens der Rohling und zumindest eine der Funktionsflächen der Preßform eine Temperaturdifferenz aufweisen, die mindestens 30 K beträgt, jedoch unterhalb eines Wertes liegt, bei-dem Inhomogenitäten und/oder Oberflächenfehler im Preßling zu befürchten sind.

Bei dem erfindungsgemäßen Verfahren wird eine Preßform verwendet, deren harte Funktionsfläche frei von mechanischer Bearbeitung ist und deshalb die hochwertige Oberflächenqualität einer strukturlos aufgebrachten Schicht aufweist. Da die Funktionsschicht sehr dünn ist und durch übliche Herstellungsverfahren mit im wesentlichen gleichmäßiger Schichtdicke entsteht, wird durch sie auch bei fehlender mechanischer Nachbearbeitung kein störender Gestaltfehler verursacht.

Die Gestaltgenauigkeit wird durch eine entsprechende Bearbeitung des unterliegenden Oberflächenbereichs der Tragschicht sichergestellt. Diese Bearbeitung soll außerdem möglichst weitgehend auch der für den herzustellenden Glaspreßkörper geforderten Oberflächenqualität entsprechen. Die darüberliegende Funktionsschicht ist so dünn, daß ihre Außenfläche die Gestalt des unterliegenden Oberflächenbereichs der Tragschicht getreu wiedergibt, wobei jedoch eine Glättung von mikrofeinen Oberflächenfehlern der Tragschicht-Oberfläche eintritt (solche mikrofeinen Oberflächenfehler können bei der mechanischen Bearbeitung verblieben sein), so daß die freie Oberfläche der Funktionsschicht eine noch bessere Oberflächenqualität als der unterliegende Oberflächenbereich der Tragschicht hat.

Dünne Schichten sind empfindlich gegen zyklisch wirkende Preß- und Ablösekräfte. Dies gilt auch für sehr dünne Schichten aus Stoffen, die normalerweise wenig zum Haften an Glas neigen. Zur Bekämpfung derartiger Schadensmöglichkeiten ist erfindungsgemäß die Anwendung einer Temperaturdifferenz zwischen dem Glasrohling und der Preßform vorgesehen, wobei diese Temperaturdifferenz so bemessen ist, daß zwar das Ablösen des Glaspreßlings von den Funktionsflächen der Preßform begünstigt wird, die Temperaturdifferenz aber andererseits nicht so groß ist, daß unerwünschte Inhomogenitäten in dem Glaspreßling zu befürchten wären. Es hat sich gezeigt, daß diese gezielt nicht-isotherme Verfahrensführung wirksam dazu beiträgt, ein unerwünschtes Haften zwischen dem Glaspreßling und den Funktionsflächen auszuschließen.

Die Funktionsschicht kann nach den zur Herstellung von unstrukturierten Dünnschichten bekannten Verfahren aufgebracht werden, z.B. epitaktisch oder amorph, durch reaktives DC-Sputtern oder durch Hochfrequenz-Kathodenzerstäubung.

In Ausgestaltung der Erfindung wird eine Preßform verwendet, deren Tragschicht aus einem Material besteht, das im wesentlichen aus wenigstens einem der Elemente Ti , Zr, Hf, V, Nb, Ta, Cr, Mo, W, Al , Si, Ge, C besteht, wobei wenigstens eines dieser Elemente als Verbindung mit Stickstoff oder Sauerstoff vorliegen kann, und daß die Funktionsschicht eine Verbindung aus Kohlenstoff und|oder Stickstoff und wenigstens einem der in der Tragschicht vorliegenden Elemente enthält.

Es hat sich gezeigt, daß auf diese Weise, d.h. durch Vorsehen gleicher Materialien in der Tragschicht und in der Funktionsschicht, eine erheblich bessere Haftung der sehr dünnen Funktionsschicht an der Tragschicht sichergestellt werden kann.

Wegen der hohen Oberflächengüte der erfindungsgemäßen Funktionsflächen können sehr hohe Oberflächenqualitäten des Glasrohlings beim Pressen erhalten werden, und es wird deshalb vorzugsweise ein Glasrohling mit einer höchstmöglichen Oberflächenqualität verwendet, etwa wie sie bei ungestörtem Glas im zähflüssigen Zustand vorliegt. Eine solche höchste Oberflächenqualität kann in Ausgestaltung der Erfindung in einfacher Weise dadurch sichergestellt werden, daß man einen Glasrohling verwendet, dessen für die optisch wirksamen Flächen des Glasformkörpers vorgesehene Oberflächenbereiche durch thermisches Spalten erzeugt worden sind.

In Ausgestaltung der Erfindung ist ferner vorzugsweise vorgesehen, daß das Verfahren in einem Reinraum durchgeführt wird, in welchem ein Teilchengehalt der Luft von unter 10⁴ /m³ vorliegt. Es hat sich gezeigt, daß sich dadurch das Auftreten von bisher unerklärlichen Mikro-Fehlstellen in der Oberfläche des hergestellten Glaspreßkörpers praktisch vermeiden läßt.

Nach einer weiteren Ausgestaltung der Erfindung wird während des Pressens in der Umgebung der Preßform ein Gesamtdurck von weniger als 10⁻² mbar aufrechterhalten. Dadurch werden mögliche chemische Wechselwirkungen zwischen den bei dem Verfahren verwendeten Materialien und gasförmigen Stoffen weitgehend vermieden. Besonders zweckmäßig ist es, wenn während des Pressens in der Umgebung der Preßform ein Partialdruck an reduzierenden oder oxidierenden Gasen, insbesondere Sauerstoff, von weniger als 10⁻³ mbar oder vorzugsweise sogar weniger als 10⁻⁵ mbar eingehalten wird. In diesem Zusammenhang ist zu beachten, daß auch reduzierende Gase störend wirken können, z.B. bei Bleigläsern eine Dunkelfärbung durch Reduktion von Bleioxid zu Blei hervorrufen können.

Nach einer besonders vorteilhaften Ausgestaltung der Erfindung wird während des Pressens in der Umgebung der Preßform eine Gasatmosphäre mit einem die Funktionsschicht regenerierenden Gehalt an Stickstoff und/oder Kohlenstoff eingestellt. Es hat sich gezeigt, daß bei den verhältnismäßig hohen Temperaturen, die beim Pressen herrschen, eine Regenerierung und damit eine Verlängerung der Standzeit der sehr dünnen Funktionsschicht erzielt werden kann. Nach derzeitigem Verständnis ist dies darauf zurückzuführen, daß die in der Funktionsschicht enthaltenen Verbindungen mit Stickstoff und Kohlenstoff, auf die vorwiegend die Härte und Verschleißfestigkeit der Funktionsschicht zurückzuführen ist, Stickstoff-Leerstellen aufweisen und/oder entwickeln können, die unter den beschriebenen Bedingungen aus der Gasatmosphäre besetzt werden können. Ein derartiger Mechanismus erscheint auch deshalb wahrscheinlich, weil die Zusammensetzungen der Verbindungen mit Stickstoff und/oder Kohlenstoff nicht immer stöchiometrisch sind.

Bei der Verwendung einer monokristallinen Tragschicht hat es sich als zweckmäßig herausgestellt, die Funktionsschicht im wesentlichen senkrecht zu einer ausgezeichneten Kristallrichtung anzuordnen. Dabei ergibt sich auch eine sehr hohe mechanische Belastbarkeit.

Hinsichtlich der Temperaturführung gilt, daß es zweckmäßig ist, zu Beginn des Pressens die Temperatur des Glasrohlings mindestens gleich der Glasübergangstemperatur Tg zu halten und die Funktionsflächen auf eine höhere Temperatur einzustellen. Auf diese Weise kann in vielen Fällen, besonders beim Pressen bei einer hohen anfänglichen Viskosität des Glasrohlings, die Preßgeschwindigkeit erhöht werden. Andererseits ist es aber auch möglich, zu Beginn des Pressens die Temperatur der Funktionsfläche in der Nähe der Glasübergangstemperatur zu halten und den Glasrohling mit einer höheren Temperatur einzusetzen. Dies kann insbesondere beim Pressen bei höheren Temperaturen und relativ niedrigen Glasviskositäten vorteilhaft sein, um eine hohe Preßgeschwindigkeit mit einer verhältnismäßig raschen Kühlung zu vereinigen.

Die beschriebenen besonderen Verfahrensweisen lassen sich insbesondere auch dann anwenden, wenn in der bekannten Weise der Glasrohling in einer Preßform mit zwei gegenüberliegenden Preßstempeln (die jeweils eine Funktionsfläche aufweisen) zu Beginn des Pressens auf einen der Preßstempel, meist auf den Unterstempel einer vertikal angeordneten Presse, gelegt wird. Es ist dann dementsprechend zweckmäßig, den Glasrohling zusammen mit diesem Preßstempel auf eine Temperatur zu bringen, die höher ist als die Temperatur des anderen Preßstempels. Insbesondere kann auf diese Weise die erfindungsgemäß vorgesehene Temperaturdifferenz dadurch angewandt werden, daß bei Verwendung einer Preßform mit zwei gegenüberliegenden Preßstempeln die Funktionsflächen der Preßstempel auf der Temperaturdifferenz gehalten werden. Es ist zweckmäßig, eine Temperaturdifferenz bis zum Ende des Pressens aufrechtzuerhalten, damit das Ablösen des Glases von den Funktionsflächen erleichtert wird.

In einer besonders vorteilhaften Ausführungsform des Verfahrens werden die angewandten Temperaturdifferenzen auf den Viskositätsverlauf des zu pressenden Glases abgestimmt und betragen vorzugsweise mindestens 50 K.

Um die Produktionsgeschwindigkeit zu erhöhen, ist es in Ausgestaltung der Erfindung zweckmäßig, wenn das Kühlen in der Preßform schon während der Verformung des Glases begonnen wird, und zwar vorzugsweise bereits in einer Anfangsphase der Verformung. Dies ist bei Vorliegen einer entsprechend hohen Anfangstemperatur ohne weiteres möglich. In diesem Zusammenhang ist darauf hinzuweisen, daß es bei dem erfindungsgemäßen Verfahren nicht erforderlich ist,
bei sehr niedrigen Temperaturen und demgemäß hohen Glasviskositäten zu arbeiten; im Gegenteil können bei dem erfindungsgemäßen Verfahren alle Vorteile bezüglich Produktionsgeschwindigkeit ausgenutzt werden, die sich aus der Wahl einer verhältnismäßig hohen Anfangstemperatur ergeben.

Das Herausnehmen des Glaspreßlings aus der Preßform kann frühzeitig erfolgen, sobald der Glaspreßling eine genügend hohe Gestaltfestigkeit angenommen hat. Vorzugsweise wird der Glaspreßling der Preßform entnommen, wenn er zumindest in der Nähe der Funktionsfläche eine Temperatur aufweist, die einer Viskosität des Glases von mindestens 10¹³ dPas entspricht.

Die erfindungsgemäße Preßform bietet besondere Vorteile hinsichtlich der Oberflächenqualität und Gestaltgenauigkeit der damit gepreßten Glasformkörper auch unabhängig von der besonderen erfindungsgemäßen Verfahrensführung.

Die Erfindung und Ausgestaltungen der Erfindung sowie die damit erzielbaren Vorteile werden im folgenden anhand von Beispielen und der Zeichnung näher erläutert.

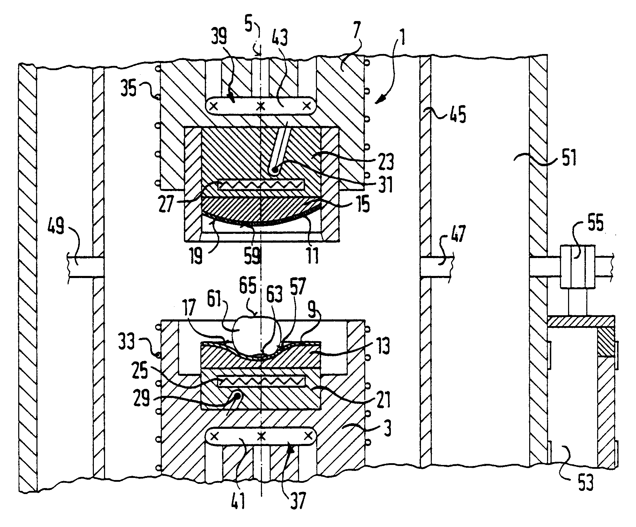

Die Figur 1 ist eine schematische Darstellung nach Art eines Vertikalschnitts und zeigt eine erfindungsgemäße Preßform zur Durchführung des erfindungsgemäßen Verfahrens.

Figur 1 zeigt schematisch eine Preßform 1 mit einem Unterstempel 3 und einem relativ dazu entlang einer vertikalen Achse 5 bewegbaren Oberstempel 7. Die Stempel 3, 7 enthalten aufeinander ausgerichtete dünne Preßform-Funktionsschichten 9 bzw. 11, die auf Tragschichten 13 bzw. 15 fest haftend aufgebracht sind und in ihren Außenflächen Funktionsflächen 17 bzw. 19 bilden, die der Oberflächengüte der optisch wirksamen Flächen und der Gestalt eines herzustellenden Glaspreßkörpers unter Berücksichtigung der Wärmedehnungen entsprechen.

Die Tragschichten 13 und 15 sind auf Tragkörpern 21 bzw. 23 abgestützt, die in Ausnehmungen der Stempel 3 bzw. 7 befestigt sind. In den Tragkörpern 21 und 23 sind steuerbare Heizeinrichtungen 25 bzw. 27, z.B. elektrische Heizdrähte, vorhanden, und zur Erfassung der Temperaturen Temperaturfühler 29 bzw. 31. Außerdem befinden sich Heizeinrichtungen 33 bzw. 35, beispielsweise elektrische Heizdrähte, Induktionsheizeinrichtungen oder dergleichen auf den Außenseiten der Preßstempel 3 und 7.

Die Tragkörper 21, 23 bestehen aus thermisch widerstandsfähigem, vorzugsweise gut wärmeleitendem Material, z. B. Metall oder Keramik, und können von Kühleinrichtungen 37 bzw. 39, die bei der dargestellten Ausführungsform Kühlkanäle 41 bzw. 43 aufweisen, gekühlt werden. Die Preßform 1 ist in einem Gehäuse 45 angeordnet, das über Leitungen 47, 49 evakuiert oder mit einer beliebigen Gasatmosphäre beaufschlagt oder gespült werden kann. Das Gehäuse 45 ist in einem Reinraum 51 angeordnet, der über eine Schleuse 53 zugänglich ist. Eine Be- und Entlüftung 55 sorgt dafür, daß in dem Reinraum 51 Luft einer gewünschten Freiheit von Teilchen-Verunreinigungen, insbesondere weniger als 10⁴ Teilchen pro m³ vorliegt.

Die unter den Funktionsschichten 9 und 11 liegenden Oberflächenbereiche 57 bzw. 59 der Tragschichten 13 bzw. 15 sind möglichst genau und mit möglichst hoher Oberflächenqualität entsprechend den optisch wirksamen Flächen des herzustellenden Glaspreßkörpers geformt, z. B. in der üblichen Weise durch Schleifen und Polieren. Damit eine hohe Oberflächenqualität erzielbar ist, bestehen die Tragschichten 13, 15 aus strukturarmem Material, das amorph oder monokristallin oder polykristallin mit einer Korngröße kleiner als 0,5 Mikrometer ist. Die Funktionsschichten 9 und 11 sind auf diese Oberflächenbereiche 57 bzw. 59 als unstrukturierte Dünnschichten aufgebracht, z. B. durch reaktives Sputtern, und haben eine gleichmäßige Dicke von unter 5 Mikrometer, z.B. 4 Mikrometer, und eine Rauhtiefe von weniger als 0,1 Mikrometer, so daß die Funktionsflächen 17 und 19 genau die Gestalt der unterliegenden Oberflächenbereiche 57 bzw. 59 haben, jedoch etwaige vom Polieren verbliebene Mikro-Oberflächenfehler der Oberflächenbereiche 57 und 59 glätten.

In Figur 1 ist dargestellt, daß auf der Funktionsfläche 17 des unteren Preßstempels 3 ein Glasrohling 61 liegt, der bei dem dargestellten Ausführungsbeispiel die Form einer Platte hat und zumindest in denjenigen Oberflächenbereichen 63, 65, die an den Funktionsflächen 17, 19, verformt werden sollen, eine höchstmögliche Oberflächenqualität hat. Insbesondere kann es sich bei diesen Oberflächenbereichen 63, 65 um durch thermisches Spalten hergestellte Spaltflächen handeln.

Die Tragschichten 13, 15 müssen gestaltsfest sein und hohe Preßkräfte übertragen können. Sie bestehen deshalb jeweils aus genügend festem Material, da dieses leicht auf die gewünschte Genauigkeit und Oberflächenqualität gebracht werden kann. Die Funktionsschichten 9, 11 bestehen vorzugsweise aus einem Material, das wenigstens einen Bestandteil mit den Tragschichten 13, 15 gemeinsam hat. Insbesondere sind folgende Materialien als Bestandteile der Schichten geeignet:

### Tragschicht:

Si, SiC, Si₃N₄, WC, Al₂O₃, SiO₂

### Funktionsschicht:

SiC, Si₃N₄, TiN, AlN, ZrN.

Eine gut geeignete Kombination besteht aus Tragschichten 13 und 15 aus Siliciumnitrid und Funktionsschichten 9 und 11 aus Titannitrid, das durch reaktives Sputtern aufgebracht wurde. Die Tragkörper 21, 23 bestehen aus Metall geringer thermischer Ausdehnung.

Vor dem Pressen werden die Preßstempel 3, 7 derart geheizt, daß die Tragschichten 13, 15 und die Funktionsschichten 9, 11 sowie der Glasrohling 61 gewünschte Anfangstemperaturen aufweisen. Der Glasrohling kann auch außerhalb der Preßform vorgeheizt werden, um eine gewünschte Temperaturdifferenz zwischen dem Glasrohling 61 und den Funktionsschichten 9, 11 der Preßform 1 voreinzustellen.

Wesentlich ist auch, daß alle Teile einschließlich des Glaspreßlings 61 vor dem Preßvorgang bestmöglich gereinigt werden.

Vor dem Aufheizen wird die Preßform 1 über die Anschlüsse 47, 49 evakuiert, mit Stickstoff gespült und dann erneut evakuiert. Solange die Preßform 1 heiß ist, wird in ihrer Umgebung ein Gesamtdruck von z.B. 10⁻³ mbar mit einem Sauerstoffpartialdruck von weniger als 10⁻⁵ mbar eingehalten.

Sobald die gewünschten Anfangstemperaturen erreicht sind, kann gepreßt werden. Wenn an einer der Funktionsschichten eine stärkere Verformung des Glases erreicht werden muß als an der anderen, ist es zweckmäßig, die Temperatur der erstgenannten Funktionsschicht etwas höher zu wählen als die der anderen Funktionsschicht, damit die Zeiten für die Formung des Glases auf beiden Seiten etwa gleich sind.

Nach einer gewählten Preßzeit, in der erfahrungsgemäß die Verformung mit Sicherheit abgeschlossen ist, kann der gebildete Preßling gekühlt und nach ausreichender Abkühlung aus der Preßform entnommen werden. Es hat sich gezeigt, daß eine Beschleunigung des Preßverfahrens dadurch erzielt werden kann, daß man die Zeitverzögerung zwischen dem Einschalten einer Kühleinrichtung und dem dadurch verursachten tatsächlichen Absinken der Temperatur dieser Funktionsfläche ausnutzt und demgemäß mit dem Kühlen schon vor Beendigung des Pressens beginnt.

Dazu wird die Heizung der Preßform 1 ausgeschaltet, und die Kühleinrichtungen 37, 39 werden in Betrieb genommen, z. B. durch Hindurchleiten eines temperierten Kühlfluids. Nachdem der geformte Glaspreßkörper eine Temperatur entsprechend einer Viskosität von etwa 10¹³ dPas unterschritten hat, kann die Preßform 1 geöffnet und der Preßkörper entnommen und durch Feinkühlen zu dem Glasformkörper fertiggestellt werden.

Im folgenden werden zwei konkrete Ausführungsbeispiele beschrieben. Dabei werden die Bezugszeichen der Figur verwendet, unabhängig davon, ob die Gestalt der gepreßten Linsen der Darstellung der Figur entspricht.

### Ausführungsbeispiel 1: Pressen einer konkav-konvexen Linse

Die Preßform 1, bestehend aus Unterstempel 3 und Oberstempel 7 hat Tragschichten 13, 15 aus monokristallinem Silicium, wobei die Flächennormalen im Mittelpunkt der Formflächen senkrecht zur 111-Kristallachse der Siliciumkristalle orientiert sind. Die zum Aufbringen der Funktionsschichten 9 bzw. 11 dienenden Oberflächenbereiche 57 bzw. 59 der Tragschichten 13, 15 sind durch mechanisches Schleifen und Feinstpolieren genau auf die Geometrie der zu formenden Linsen abgestimmt. Die Oberflächengüte der Oberflächenbereiche 57, 59 ist besser als die Mindestanforderung an die zu formenden Linsen und entspricht der Spezifikation 5/2 x 0,040 nach DIN 3140. Die Oberflächenrauhigkeit beträgt ca. 0,4 nm rms. Durch Kathodenzerstäubung in einer Atmosphäre, die Argon und Stickstoff enthält, sind gleichmäßig dünne Funktionsschichten 9, 11 (Schichtdicke ca. 100 nm) bestehend aus Silicium, Titan und Stickstoff auf den Oberflächenbereichen 57 bzw. 59 abgeschieden worden. Die Oberflächenrauhigkeit der so erzeugten Funktionsflächen 17 bzw. 19 beträgt ca. 0,6 nm rms.

Auf dem Unterstempel 3 der Preßform 1, der einen Durchmesser von 10 mm und dessen Formfläche eine sphärisch konkave Kontur mit Radius R = 10 mm hat, wird der Glasrohling 61 positioniert. Als Glasrohling 61 wird eine Kugel mit einem Durchmesser von 6,5 mm und einer durch mechanisches Polieren auf optische Qualität gebrachten Oberfläche verwendet. Das Glas hat die Zusammensetzung (in Gewichtsprozent) 46 % SiO₂, 45 % PbO, 4 % Na₂O, 5 % K₂O und eine Transformationstemperatur von 432°C.

In der Umgebung der Preßform 1 (in der Prozeßkammer) wird der Totaldruck durch Evakuieren auf etwa 10⁻⁵ mbar abgesenkt; der Sauerstoff-Partialdruck beträgt dann weniger als 5 . 10⁻⁶ mbar. Durch Zugabe von reinem Stickstoff wird der Totaldruck in der Umgebung der Preßform 1 auf etwa 10⁻³ mbar erhöht, wobei der Sauerstoff-Partialdruck praktisch unverändert bleibt. Mit einer Hochfrequenz-Induktionsheizung wird der Oberstempel 7 auf etwa 460°C und der Unterstempel 3 mit dem darauf liegenden Glasrohling auf etwa 520°C erhitzt. Die Stempel 3, 7 werden zusammengefahren, und der Glasrohling 61 wird zu einer konkav-konvexen Linse geformt. Während des Formgebungsvorganges wird die Preßkraft kontinuierlich auf etwa 2 kN erhöht, und die Temperaturen von Ober- und Unterstempel werden auf 430°C abgesenkt. Bei dieser Temperatur hat das Glas eine Viskosität von etwa 5,1 . 10¹² dPas. Nach etwa 1 Minute Preßdauer wird der Preßdruck verringert, die Stempel werden auseinandergefahren und die gepreßte Linse wird der Preßform entnommen. Anschließend wird die Linse feingekühlt.

Die geformte konkav-konvexe Linse hat einen Außendurchmesser von 11,2 mm und eine Mittendicke von 2,1 mm. Die Kontur der Linse weicht um weniger als 0,5 Ringe von der Sollkontur ab. Die Unregelmäßigkeit beträgt weniger als 0,1 Ringe. Anzahl und Größe der Oberflächenfehler auf den geformten Glasoberflächen sind geringer als 5/2 x 0,063 nach DIN 3140. Die Oberflächenrauhigkeit der Linse beträgt ca. 0,6 nm rms. Die Wellenfrontabweichung ist kleiner als λ/10.

### Ausführungsbeispiel 2: Pressen einer asphärischen Linse

Die Tragschichten 13 und 15 von Unterstempel 3 bzw. Oberstempel 7 der Preßform 1 bestehen aus mono-kristallinem Al₂O₃ (synthetischer Saphir). Die Oberflächenbereiche 57, 59 sind durch mechanisches Schleifen und Feinstpolieren genau auf die Geometrie der zu formenden Linsen gearbeitet. Ober- und Unterstempel haben einen Außendurchmesser von 36 mm und eine konvexe Kontur der Funktionsflächen 17, 19, wobei die Kontur des Oberflächenbereichs 57 des Unterstempels 3 asphärisch geformt ist. Größe und Anzahl der Oberflächenfehler auf den polierten Oberflächenbereichen 57, 59 genügen der Spezifikation 5/2 x 0,040 nach DIN 3140. Die Oberflächenrauhigkeit beträgt weniger als 0,6 nm rms. Durch reaktive Kathodenzerstäubung in einer Stickstoff-Atmosphäre werden je eine ca. 300 nm dicke Funktionsschicht 17 bzw. 19, bestehend aus Aluminium, Titan, Zirkon und Stickstoff, auf die Oberflächenbereiche 57, 59 der Saphir-Tragschichten 13, 15 aufgebaut. Die Oberflächenrauhigkeit der so erzeugten Funktionsflächen 17 bzw. 19 ist geringer als 0,5 nm rms.

Als Glasrohling 61 wird ein Quader (35 x 35 x 12 mm) verwendet, dessen Ober- und Unterseite, die zu den optisch wirksamen Flächen der Linse umgeformt werden, durch thermisches Spalten erzeugt sind. Verwendet wird hier ein Glas der Zusammensetzung (in Gewichtsprozent) 42 % La₂O₃, 35 % B₂O₃, 4 % SiO₂, 3 % CaO, 16 % ZnO + ZrO₂ + TiO₂; die Transformationstemperatur dieses Glases beträgt 611°C.

Der Glasrohling wird in dem Gehäuse 45, in der die gleiche Umgebungsatmosphäre wie bei Beispiel 1 eingestellt ist, jedoch außerhalb der Preßform, auf etwa 645°C erhitzt. Oberstempel 7 und Unterstempel 3 werden mit separaten Widerstandsheizkörpern auf etwa 702°C bzw. 689°C aufgeheizt. Der Glasrohling 61 wird in die Preßform 1 gebracht und unter langsam ansteigender Preßkraft umgeformt, wobei der Rohling während des gesamten Umformvorgangs an seinem Rand gehaltert wird. Schon vor Erreichen der maximalen Preßkraft von 5 kN, die ca. 2 Minuten lang gehalten wird, werden die Temperaturen von Ober- und Unterstempel heruntergeregelt, bis 609°C erreicht sind; sodann wird der Preßdruck langsam, innerhalb von etwa 2 Minuten, auf Null abgesenkt, die Preßstempel werden auseinandergefahren und die geformte bikonkave Linse wird der Preßform entnommen. Die Linse wird anschließend außerhalb der Prozeßkammer feingekühlt. Die optisch wirksame Fläche der Linse hat einen Durchmesser von 33 mm bei einer Mittendicke von 9,2 mm. Die Konturgenauigkeit der geformten Linse liegt innerhalb von 0,5 Ringen gegenüber der Sollkontur mit einem regelmäßigen Paßfehler von weniger als 0,1 Ringen. Die Oberflächenrauhigkeit der gepreßten Glasoberflächen beträgt etwa 0,5 nm rms.

## Patentansprüche

1. Verfahren zum Pressen eines Glasformkörpers für präzisionsoptische, insbesondere abbildende Zwecke, der zumindest in den optisch wirksamen Bereichen keiner Oberflächennachbearbeitung bedarf, wobei das Verfahren folgende Merkmale aufweist:
Verwenden einer Preßform mit auf Tragschichten ausgebildeten Funktionsschichten, die aus einem verschleißarmen Material bestehen und deren dem Preßling ausgesetzte Funktionsflächen eine dem zu erzeugenden Glaskörper entsprechend hohe Oberflächengüte aufweisen,
Verwenden eines Glasrohlings, dessen Oberfläche in den optisch relevanten Bereichen eine hohe Oberflächenqualität; mindestens entsprechend einer Feuerpoliturqualität aufweist,
Verformen des Glasrohlings in der Preßform bei erhöhter Temperatur unter einer im wesentlichen inerten Atmosphäre und
Abkühlen des Glasformlings in der Preßform bis zum Erreichen einer ausreichenden Gestaltfestigkeit, um den Preßling als fertigen Glasformkörper der Preßform entnehmen zu können,
dadurch gekennzeichnet,
daß eine Preßform (1) verwendet wird, deren gestaltfeste Tragschichten (13, 15) aus einem amorphen, monokristallinen oder polykristallinen Material mit einer Korngröße <0,5 µm ausgebildet wurden, das wenigstens eines der Elemente Ti, Zr, Hf, V, Nb, Ta, Cr, Mo, W, Al, Si, Ge und C enthält und diese Tragschichten (13, 15) an ihren die Funktionsschichten (9, 11) tragenden Flächen in einer Oberflächengüte bearbeitet wurden, die mindestens der Spezifikation 5/2 x 0,040 gemäß DIN 3140 entspricht, wobei die Funktionsschichten (9, 11) mindestens eines der in der Tragschicht (13, 15) vorliegenden Elemente und eine Verbindung aufweisen, die C und/oder N enthält und als unstrukturierte Schicht in einer Dicke bis maximal 5 µm auf die Tragschichten (13, 15) aufgetragen wurde, wobei die unbearbeitete Oberflache (57, 59) der Funktionsschichten (9, 11) die Funktionsfläche (17, 19) bildet,
die verwendete, im wesentliche inerte Atmosphäre nicht oxidierend ist und einen Sauerstoffpartialdruck von weniger als 10⁻³mbar aufweist, und
der Preßvorgang temperaturmäßig so geführt wird, daß zu Beginn des Pressens der Rohling (61) und zumindest eine der Funktionsflächen (17, 19) der Preßform eine Temperaturdifferenz aufweisen, die mindestens 30 K beträgt, jedoch unterhalb eines Wertes liegt, bei dem Inhomogenitäten und/oder Oberflächenfehler im Preßling zu befürchten sind.

2. Verfahren nach Anspruch 1, dadurch gekennzeichnet, daß mindestens eines dieser Elemente für das Material der Tragschicht (13, 15) als Stickstoff- oder Sauerstoffverbindung zugegeben worden ist.

3. Verfahren nach Anspruch 2, dadurch gekennzeichnet, daß ein Glasrohling (61) verwendet wird, dessen für die optisch wirksamen Flächen des Glasformkörpers vorgesehene Oberflächenbereiche (63, 65) durch thermisches Spalten erzeugt worden sind.

4. Verfahren nach einem der vorhergehenden Ansprüche, dadurch gekennzeichnet, daß es in einem Reinraum (51) durchgeführt wird, in welchem ein Teilchengehalt der Luft von unter 10⁴/m³ vorliegt.

5. Verfahren nach einem der vorhergehenden Ansprüche, dadurch gekennzeichnet, daß während des Pressens in der Umgebung der Preßform (1) ein Gesamtdruck von weniger als 10⁻²mbar aufrecht erhalten wird.

6. Verfahren nach einem der vorhergehenden Ansprüche, dadurch gekennzeichnet, daß während des Pressens in der Umgebung der Presßform (1) ein Partialdruck an reduzierenden und/oder oxidierenden Gasen von weniger als 10⁻³mbar, vorzugsweise weniger als 10⁻⁵mbar, eingehalten wird.

7. Verfahren nach einem der vorhergehenden Ansprüche, dadurch gekennzeichnet, daß während des Pressens in der Umgebung der Preßform (1) eine Gasatmosphäre mit einem die Funktionsschicht (9, 11) regenerierenden Gehalt an Stickstoff und/oder Kohlenstoff eingestellt wird.

8. Verfahren nach einem der vorhergehenden Ansprüche, dadurch gekennzeichnet, daß bei Verwendung einer monokristallinen Tragschicht (13, 15) die Funktionsschicht (9, 11) im wesentlichen senkrecht zu einer ausgezeichneten Kristallrichtung der Tragschicht angeordnet ist.

9. Verfahren nach einem der vorhergehenden Ansprüche, dadurch gekennzeichnet, daß zu Beginn des Pressens die Temperatur des Glasrohlings (61) mindestens gleich der Glasübergangstemperatur T_{g} ist und die Funktionsflächen (17, 19) eine höhere Temperatur aufweisen.

10. Verfahren nach einem der Ansprüche 1-8, dadurch gekennzeichnet, daß zu Beginn des Pressens die Temperatur der Funktionsflächen (17, 19) in der Nähe der Glasübergangstemperatur T_{g} liegt und der Glasrohling (61) eine höhere Temperatur aufweist.

11. Verfahren nach einem der Ansprüche 1-8, dadurch gekennzeichnet, daß bei Verwendung einer Preßform (1) mit einem Unterstempel (3) und einem Oberstempel (7) der Glasrohling (61) auf die Funktionsfläche (17) des Unterstempels (3) gelegt und zusammen mit dem Unterstempel auf eine Temperatur gebracht wird, die höher ist als die Temperatur des Oberstempels (7).

12. Verfahren nach einem der vorhergehenden Ansprüche, dadurch gekennzeichnet, daß bei Verwendung einer Preßform (1) mit zwei gegenüberliegenden Preßstempeln (3, 7) die Funktionsflächen (17, 19) auf unterschiedlichen Temperaturen gehalten werden.

13. Verfahren nach Anspruch 12, dadurch gekennzeichnet, daß bei ungleichen Verformungen der Glasoberflächen die Funktionsfläche (17), an der die stärkere Verformung stattfindet, auf einer höheren Temperatur als die andere Funktionsfläche (19) gehalten wird.

14. Verfahren nach einem der vorhergehenden Ansprüche, dadurch gekennzeichnet, daß eine Temperaturdifferenz bis zum Ende des Pressens aufrecht erhalten wird.

15. Verfahren nach einem der vorhergehenden Ansprüche, dadurch gekennzeichnet, daß die Temperaturdifferenz mindestens 50 K beträgt.

16. Verfahren nach einem der vorhergehenden Ansprüche, dadurch gekennzeichnet, daß der Glasrohling (61) außerhalb der Preßform (1) vorerwärmt wird.

17. Verfahren nach einem der vorhergehenden Ansprüche, dadurch gekennzeichnet, daß das Kühlen in der Preßform (1) während der Verformung des Glases, vorzugsweise in deren Anfangsphase, begonnen wird.

18. Verfahren nach einem der vorhergehenden Ansprüche, dadurch gekennzeichnet, daß der Glaspreßling der Preßform (1) entnommen wird, wenn er zumindest in der Nähe der Funktionsfläche (17, 19) eine Temperatur aufweist, die einer Viskosität des Glases von mindestens 10¹³ dPas entspricht.

19. Preßform zur Durchführung des Verfahrens nach einem der vorhergehenden Ansprüche gekennzeichnet durch eine als Funktionsschicht (9, 11) dienende von mechanischer Bearbeitung freie, unstrukturierte Dünnschicht, die eine Dicke von weniger als 5 Mikrometer und eine Rauhtiefe von weniger als 0,1 Mikrometer aufweist und auf einen mindestens mit einer Spezifikation 5/2 x 0,040 gemäß DIN 3140 entsprechenden Oberflächengüte bearbeiteten Oberflächenbereich (57, 59) einer gestaltsfesten Tragschicht (13, 15), die aus amorphem, monokristallinem oder polykristallinem Material mit einer Korngröße < 0,1 Mikrometer besteht, fest haftend aufgebracht ist.

20. Preßform nach Anspruch 19, gekennzeichnet durch eine Tragschicht (13, 15), die im wesentlichen aus wenigstens einem der Elemente Ti, Zr, Hf, V, Nb, Ta, Cr, Mo, W, Al, Si, Ge, Z besteht, wobei wenigstens eines dieser Elemente als Verbindung mit Stickstoff oder Sauerstoff vorliegen kann, und eine Funktionsschicht (17, 19), die eine Verbindung aus C und/oder N und wenigstens eines der in der Tragschicht (13, 15) vorliegenden Elemente enthält.

21. Preßform nach Anspruch 19 oder 20, gekennzeichnet durch eine Funktionsschicht (9, 11), die bei Verwendung einer monokristallinen Tragschicht (13, 15) im wesentlichen senkrecht zu einer ausgezeichneten Kristallrichtung der Tragschicht angeordnet ist.

## Claims

1. Method of pressing a glass moulded article for precision-optical, especially image-forming, purposes, which has no need of surface after-treatment at least in the optical regions, the method having the following features:
using a compression mould having function layers which are constructed on support layers, are of a wear-resistant material and whereof the function surfaces exposed to the pressed part have a high surface quality corresponding to the glass article to be produced,
using a glass preform whereof the surface has a high surface quality in the optically relevant regions, at least corresponding to a fire-polishing quality,
shaping the glass preform in the compression mould at elevated temperature, in a substantially inert atmosphere, and
cooling the glass preform in the compression mould until adequate dimensional stability is achieved to be able to remove the pressed part from the compression mould as a finished glass moulded article, characterized in that a compression mould (1) whereof the dimensionally stable support layers (13, 15) were constructed from an amorphous, monocrystalline or polycrystalline material having a particle size of <0.5 µm is used, which contains at least one of the elements Ti, Zr, Hf, V, Nb, Ta, Cr, Mo, W, Al, Si, Ge and C, and these support layers (13, 15) were treated on their surfaces supporting the function layers (9, 11) to a surface quality which corresponds at least to the specification 5/2 x 0.040 in accordance with DIN 3140, the function layers (9, 11) having at least one of the elements present in the support layer (13, 15) and a compound which contains C and/or N and was applied to the support layers (13, 15) as an unstructured layer in a thickness of at most 5 µm, the untreated surface (57, 59) of the function layers (9, 11) forming the function surface (17, 19),
in that the substantially inert atmosphere used is non-oxidizing and has an oxygen partial pressure of less than 10⁻³ mbar, and
in that the compression procedure is temperature-controlled such that at the start of compression the preform (61) and at least one of the function surfaces (17, 19) of the compression mould have a temperature difference which is at least 30 K but is below a value at which inhomogeneities and/or surface defects in the pressed part are to be feared.

2. Method according to Claim 1, characterized in that at least one of these elements for the material of the support layer (13, 15) is added as a nitrogen or oxygen compound.

3. Method according to Claim 2, characterized in that a glass preform (61) whereof the surface regions (63, 65) provided for the optically active surfaces of the glass moulded article have been produced by thermal cleaving is used.

4. Method according to one of the preceding claims, characterized in that it is carried out in a clean room (51) in which a particle content of below 10⁴/m³ is present in the air.

5. Method according to one of the preceding claims, characterized in that during compression a total pressure of less than 10⁻² mbar is maintained in the atmosphere surrounding the compression mould (1).

6. Method according to one of the preceding claims, characterized in that during compression a partial pressure of reductive and/or oxidizing gases of less than 10⁻³ mbar, preferably less than 10⁻⁵ mbar, is maintained in the atmosphere surrounding the compression mould (1).

7. Method according to one of the preceding claims, characterized in that during compression a gas atmosphere having a content of nitrogen and/or carbon which regenerates the function layer (9, 11) is established in the atmosphere surrounding the compression mould (1).

8. Method according to one of the preceding claims, characterized in that when using a monocrystalline support layer (13, 15) the function layer (9, 11) is arranged substantially perpendicular to a pronounced crystal direction of the support layer.

9. Method according to one of the preceding claims, characterized in that at the start of compression the temperature of the glass preform (61) is at least equal to the glass transition temperature T_{g} and the function surfaces (17, 19) are at a higher temperature.

10. Method according to one of Claims 1-8, characterized in that at the start of compression the temperature of the function surfaces (17, 19) is in the vicinity of the glass transition temperature T_{g} and the glass preform (61) is at a higher temperature.

11. Method according to one of Claims 1-8, characterized in that when using a compression mould (1) having a bottom ram (3) and a top ram (7) the glass preform (61) is laid on the function surface (17) of the bottom ram (3) and, together with the bottom ram, is brought to a temperature which is higher than the temperature of the top ram (7).

12. Method according to one of the preceding claims, characterized in that when using a compression mould (1) having two opposing pressure rams (3, 7) the function surfaces (17, 19) are kept at different temperatures.

13. Method according to Claim 12, characterized in that if the glass surfaces are shaped dissimilarly the function surface (17) on which the greater degree of shaping takes place is kept at a higher temperature than the other function surface (19).

14. Method according to one of the preceding claims, characterized in that the temperature difference is maintained until the end of compression.

15. Method according to one of the preceding claims, characterized in that the temperature difference is at least 50 K.

16. Method according to one of the preceding claims, characterized in that the glass preform (61) is pre-heated outside the compression mould (1).

17. Method according to one of the preceding claims, characterized in that cooling is started in the compression mould (1) during shaping of the glass, preferably in the initial phase thereof.

18. Method according to one of the preceding claims, characterized in that the glass shaped part is removed from the compression mould (1) when, at least in the vicinity of the function surface (17, 19), it is at a temperature which corresponds to a viscosity of the glass of at least 10¹³ dPas.

19. Compression mould for carrying out the method according to one of the preceding claims, characterized by an unstructured thin layer which serves as a function layer (9, 11), has not been mechanically treated and has a thickness of less than 5 micrometres and a surface roughness of less than 0.1 micrometres and is applied in fixedly adhesive manner to a surface region (57, 59), treated at least to a specification of 5/2 x 0.040 in accordance with DIN 3140, of a dimensionally stable support layer (13, 15) which is of an amorphous, monocrystalline or polycrystalline material having a particle size of less than 0.1 micrometres.

20. Compression mould according to Claim 19, characterized by a support layer (13, 15) which substantially comprises at least one of the elements Ti, Zr, Hf, V, Nb, Ta, Cr, Mo, W, Al, Si, Ge, Z, it being possible for at least one of these elements to be present as a compound with nitrogen or oxygen, and a function layer (17, 19) which contains a compound of C and/or N and at least one of the elements present in the support layer (13, 15).

21. Compression mould according to Claim 19 or 20, characterized by a function layer (9, 11) which, when using a monocrystalline support layer (13, 15), is arranged substantially perpendicular to a pronounced crystal direction of the support layer.

## Revendications

1. Procédé de pressage d'un corps de verre à des fins de précision optique, en particulier à des fins de formation d'images, qui ne nécessite pas de traitement de finition des surfaces du moins dans les parties optiquement actives, le procédé présentant les caractéristiques suivantes :
- utilisation d'un moule de pressage comportant des couches fonctionnelles formées sur des couches de support, ces couches fonctionnelles étant constituées d'un matériau peu enclin à l'usure et dont les faces fonctionnelles exposées à l'ébauche présentent une surface de qualité élevée correspondant à celle du corps de verre à produire;
- utilisation d'une ébauche de verre dont la surface présente, dans les parties optiquement importantes, une surface de qualité élevée correspondant au moins à une qualité de poli naturel;
- moulage de l'ébauche de verre dans le moule de pressage à température élevée et sous une atmosphère essentiellement inerte, et
- refroidissement de la pièce moulée dans le moule de pressage jusqu'à atteindre une stabilité de forme suffisante pour pouvoir retirer la pièce moulée sous la forme d'un corps de verre pressé fini du moule de pressage,
caractérisé en ce qu'on utilise un moule de pressage (1) dont les couches de support de forme stable (13, 15) ont été formées à partir d'un matériau amorphe, monocristallin ou polycristallin ayant une grosseur de grain inférieure à 0,5 µm, qui contient au moins l'un des éléments Ti, Zr, Hf, V, Nb, Ta, Cr, Mo, W, Al, Si, Ge et C et ces couches de support (13, 15) ont été traitées au niveau de leurs faces portant les couches fonctionnelles (9, 11) de manière à obtenir une qualité de surface qui correspond au moins à la spécification 5/2 x 0,040 selon la norme DIN 3140, les couches fonctionnelles (9, 11) contenant au moins un des éléments présents dans la couche de support (13, 15) et un composé qui contient du carbone et/ou de l'azote et a été appliqué sous la forme d'une couche non structurée en une épaisseur allant au maximum jusqu'à 5 µm sur les couches de support (13, 15), la surface non traitée (57, 59) des couches fonctionnelles (9, 11) formant la surface fonctionnelle (17, 19),
l'atmosphère en substance inerte utilisée n'est pas oxydante et présente une pression partielle d'oxygène inférieure à 10⁻³ mbar, et
l'opération de pressage est réalisée, en termes de température, de telle sorte qu'au début du pressage, l'ébauche (61) et au moins une des surfaces fonctionnelles (17, 19) du moule de pressage présentent une différence de température qui atteint au moins 30°K, mais se situe en dessous d'une valeur qui pourrait induire des défauts d'homogénéité et/ou des défauts superficiels dans la pièce pressée.

2. Procédé selon la revendication 1, caractérisé en ce qu'au moins un desdits éléments du matériau de la couche de support (13, 15) a été ajouté sous la forme d'un composé d'azote ou d'oxygène.

3. Procédé selon la revendication 2, caractérisé en ce qu'on utilise une ébauche de verre (61) dont les parties superficielles (63, 35) prévues pour les surfaces optiquement actives du corps de verre pressé ont été obtenues par clivage thermique.

4. Procédé selon l'une quelconque des revendications précédentes, caractérisé en ce qu'il est réalisé dans une chambre blanche (51) dans laquelle la teneur en particules de l'air est inférieure à 10⁴/m³.

5. Procédé selon l'une quelconque des revendications précédentes, caractérisé en ce qu'au cours du pressage, on entretient dans l'environnement du moule de pressage (1) une pression totale inférieure à 10⁻² mbar.

6. Procédé selon l'une quelconque des revendications précédentes, caractérisé en ce que, pendant le pressage, on établit dans l'environnement du moule de pressage (1) une pression partielle de gaz réducteurs et/ou oxydants inférieure à 10⁻³ mbar, de préférence inférieure à 10⁻⁵ mbar.

7. Procédé selon l'une quelconque des revendications précédentes, caractérisé en ce que, pendant le pressage, on établit dans l'environnement du moule de pressage (1) une atmosphère de gaz ayant une teneur en azote et/ou en carbone régénérant la couche fonctionnelle (9, 11).

8. Procédé selon l'une quelconque des revendications précédentes, caractérisé en ce que, lorsqu'on utilise une couche de support monocristalline (13, 15), la couche fonctionnelle (9, 11) est disposée en substance perpendiculairement à une direction cristalline remarquable de la couche de support.

9. Procédé selon l'une quelconque des revendications précédentes, caractérisé en ce que, au début de l'opération de pressage, la température de l'ébauche de verre (61) est au moins égale à la température de transition du verre T_{g} et les surfaces fonctionnelles (17, 19) présentent une température supérieure.

10. Procédé selon l'une quelconque des revendications 1 à 8, caractérisé en ce qu'au début de l'opération de pressage, la température des surfaces fonctionnelles (17, 19) se situe au voisinage de la température de transition du verre T_{g} et l'ébauche de verre (61) présente une température supérieure.

11. Procédé selon l'une quelconque des revendications 1 à 8, caractérisé en ce que, lorsqu'on utilise un moule de pressage (1) doté d'un piston inférieur (3) et d'un piston supérieur (7), l'ébauche de verre (61) est placée sur la surface fonctionnelle (17) du piston inférieur (3) et, conjointement avec le piston inférieur, est portée à une température qui est supérieure à la température du piston supérieur (7).

12. Procédé selon l'une quelconque des revendications précédentes, caractérisé en ce que, lorsqu'on utilise un moule de pressage (1) doté de deux pistons de pressage (3, 7) opposés l'un à l'autre, les surfaces fonctionnelles (17, 19) sont maintenues à des températures différentes.

13. Procédé selon la revendication 12, caractérisé en ce que, dans le cas de déformations inégales des surfaces de verre, la surface fonctionnelle (17), au niveau de laquelle s'opère la déformation la plus importante, est maintenue à une température supérieure à celle de l'autre surface fonctionnelle (19).

14. Procédé selon l'une quelconque des revendications précédentes, caractérisé en ce qu'une différence de température est maintenue jusqu'à la fin du pressage.

15. Procédé selon l'une quelconque des revendications précédentes, caractérisé en ce que la différence de température est au moins de 50°K.

16. Procédé selon l'une quelconque des revendications précédentes, caractérisé en ce que l'ébauche de verre (61) est préchauffée à l'extérieur du moule de pressage (1).

17. Procédé selon l'une quelconque des revendications précédentes, caractérisé en ce que le refroidissement dans le moule de pressage (1) débute pendant la déformation du verre, de préférence dans sa phase initiale.

18. Procédé selon l'une quelconque des revendications précédentes, caractérisé en ce que l'ébauche de verre pressée est retirée du moule de pressage (1) lorsqu'elle présente, au moins au voisinage de la surface fonctionnelle (17, 19), une température qui correspond à une viscosité du verre d'au moins 10¹³dPas.

19. Moule de pressage permettant de réaliser le procédé selon l'une quelconque des revendications précédentes, caractérisé par une couche mince non structurée exempte de tout traitement mécanique et servant de couche fonctionnelle (9, 11), laquelle couche mince présente une épaisseur inférieure à 5 µm et une profondeur de rugosité inférieure à 0,1 µm et est appliquée de manière à adhérer solidement sur une zone superficielle (57, 59) d'une couche de support (13, 15) de forme stable traitée de manière à présenter une qualité superficielle correspondant à la spécification 5/2 x 0,040 selon la norme DIN 3140, la couche de support étant constituée d'un matériau amorphe, monocristallin ou polycristallin avec une grosseur de grain inférieure à 0,1 µm.

20. Moule de pressage selon la revendication 19, caractérisé par une couche de support (13, 15) qui est constituée en substance d'au moins un des éléments suivants Ti, Zr, Hf, V, Nb, Ta, Cr, Mo, W, Al, Si, Ge, Z, au moins un de ces éléments pouvant être présent sous la forme d'un composé avec de l'azote ou de l'oxygène, et par une couche fonctionnelle (17, 19), qui contient un composé de carbone et/ou d'azote et au moins un des éléments présents dans la couche de support (13, 15).

21. Moule de pressage selon la revendication 19 ou 20, caractérisé par une couche fonctionnelle (9, 11) qui est disposée en substance perpendiculairement à une direction cristalline remarquable de la couche de support, lorsque l'on utilise une couche de support monocristalline (13, 15).
